# EUROPÄISCHE PATENTANMELDUNG

(11) **EP 1 601 174 A1**
(43) Veröffentlichungstag der Anmeldung: **30.11.2005**
(21) Anmeldenummer: 04011138.7
(22) Anmeldetag: 11.05.2004
(51) Int. Cl.: H04M 15/00, H04M 3/42

(54) **Verfahren und System zur automatischen Freigabe eines Aufbaus einer Mehrwertverbindung, die im offline-billing Verfahren abgerechnet wird**

(71) Anmelder: Nexnet GmbH, 13507 Berlin (DE)
(72) Erfinder: Weyerstrass, Lars, 17217 Penzlin (DE); Weigel, Stefan Dr., 12165 Berlin (DE)
(74) Vertreter: Durm, Frank

(57) **Zusammenfassung**

Zur automatischen Freigabe eines Aufbaus einer Mehrwertverbindung, die im offline-billing Verfahren abgerechnet wird, wird eine Zulassungsdatenbank (1) mit Teilnehmernummern, die zum offline-billing zugelassen sind, damit ein Verbindungsnetzbetreiber (2) durch eine Datenverbindung mit der Zulassungsdatenbank (1) überprüfen kann, ob ein Teilnehmer mit einer bestimmten Teilnehmernummer zugelassen ist, die Mehrwertverbindung aufzubauen und/oder eine PIN-Datenbank (3) mit Teilnehmernummern und PIN-Nummern bereitgestellt, damit ein Verbindungsnetzbetreiber (2) durch eine Datenverbindung mit der PIN-Datenbank (3) überprüfen kann, ob sich ein Teilnehmer mit einer bestimmten Teilnehmernummer mit einer bestimmten PIN-Nummer verifizieren kann, um die Mehrwertverbindung aufzubauen.

## Beschreibung

Die Erfindung betrifft ein Verfahren und ein System zur automatischen Freigabe eines Aufbaus einer Mehrwertverbindung, die im offline-billing Verfahren abgerechnet wird. Insbesondere ist die Erfindung auf höherwertige Mehrwertverbindungen gerichtet.

Durch Festlegung am Telekommunikationsmarkt sollen bestimmte Dienste, z.B. die aus der Gasse 0190-0 und 0900 im sogenannten offline-billing Verfahren abgerechnet werden.

Der Endkunde hat heute die Möglichkeit, seinen Netzzugang direkt einem Teilnehmernetzbetreiber (TNB) oder alternativ dazu bei einem Reseller eines TNB zu wählen. Die Aussage gilt unabhängig davon, ob es sich um das Netz der Deutschen Telekom oder eines anderen, alternativen TNB handelt. Der Reseller selbst nutzt keine eigene Netzinfrastruktur sondern wickelt seine Geschäfte über die vorhandene Netzstruktur eines TNB ab.

Der TNB routet dann den Verkehr für die Gasse 0900 zum Netz der Deutschen Telekom, wenn der Dienst im Netz der Deutschen Telekom realisiert ist, bzw. routet den Verkehr in das Netz eines alternativen VNB, falls der Dienst hier implementiert ist. Im umgekehrten Fall behält die Deutsche Telekom den eigenen VNB Verkehr und routet den Offline-Billing Verkehr im Falle eines fremden Dienstekunden aus ihrem Netz heraus.

Der VNB bzw. der VNB/SP routet den 0900 Verkehr entweder direkt zu seinen Dienstekunden (DK) oder virtuell über einen VNB-Reseller zum DK. Physikalisch routet er den Verkehr auf jeden Fall direkt zum eigentlichen Dienstleistungserbringer.

Besteht für einen TNB kein direktes Interconnectionverhältnis zum VNB, VNB/SP, so wird der Verkehr über einen Transit-VNB (in der Regel die Deutsche Telekom) zugestellt.

Es kann natürlich eventuell weitere Reseller, auch unter Dienstekunden, geben. Ebenso ist ein Transit-VNB möglich.

Die oben beschriebenen Regeln gelten auch im Netz der Deutschen Telekom.

Beim offline-billing rechnet der leistungserbringende Netzbetreiber (optional) nicht direkt mit dem Endkunden ab, sondern übergibt dem abrechnenden Netzbetreiber die bepreisten Gesprächsdatensätze zur Abrechnung gegenüber dem Endkunden. Dieses mit dem offenen Call-by-Call erfolgreich eingeführte Verfahren weist jedoch in dem Moment Probleme auf, wo der leistungserbringende Netzbetreiber (VNB/SP) keine direkte Zusammenschaltung mit dem abrechnenden Netzbetreiber hat. In diesen Fällen muss der Ursprungsnetzbetreiber (= abrechnender Netzbetreiber) ermittelt werden.

Dies muss insbesondere geschehen, da einem Teilnehmernetzbetreiber (TNB) die Preise und Tarife für die Nutzung des Dienstes durch seine Kunden nicht bekannt sind. Der Serviceprovider, in der Regel ein Verbindungsnetzbetreiber (VNB) mit Serviceplattform (VNB/SP), hat dann umgekehrt das Problem das Teilnehmernetz, in dem der Dienst seinen Ursprung hat, nicht zu kennen und kann folglich nicht mit dem Kunden abrechnen.

Ein weiteres Problem ist, dass Aufbau des Calls und Abrechnung zeitlich auseinander liegen. Dadurch entsteht die Situation, dass Calls zum Datum X korrekt in das Netz des Carriers gelangen, die Information aber zum Datum Y im Billingsystem bereits nicht mehr aktuell ist.

Mit Beginn der 0900 Rufnummernvergabe für Mehrwertdienste im Oktober 2001 erfordert diese Problematik besondere Aufmerksamkeit, da Netzbetreiber bei falscher Informationsgrundlage in hohem Maße geschädigt werden können.

Deshalb liegt der Erfindung die Aufgabe zugrunde, ein Verfahren und ein System zur automatischen Freigabe eines Aufbaus einer Mehrwertverbindung, die im offline-billing Verfahren abgerechnet wird, anzugeben, womit eine solche Schädigung von Netzbetreibern verhindert wird.

Verfahren zur automatischen Freigabe eines Aufbaus einer Mehrwertverbindung, die im offline-billing Verfahren abgerechnet wird, nach der Erfindung sind in den unabhängigen Patentansprüchen 1 und 2 definiert. Systeme zur automatischen Freigabe eines Aufbaus einer Mehrwertverbindung, die im offline-billing Verfahren abgerechnet wird, nach der Erfindung sind in den unabhängigen Patentansprüchen 11 und 12 definiert. Vorteilhafte Weiterbildungen sind jeweils in den jeweiligen abhängigen Patentansprüchen definiert.

Ein Verfahren zur automatischen Freigabe eines Aufbaus einer Mehrwertverbindung, die im offline-billing Verfahren abgerechnet wird, nach der Erfindung umfasst die Schritte:
- Aufbau oder Annahme einer Verbindung mit wenigstens einem Teilnehmernetzbetreiber,
- Empfangen von Teilnehmernummern des wenigstens einen Teilnehmernetzbetreibers,
- Überprüfen, ob die empfangenen Teilnehmernummern jeweils zum offline-billing zugelassen sind,
- Füllen einer Zulassungsdatenbank mit denjenigen Teilnehmernummern, die zum offline-billing zugelassen sind, damit ein Verbindungsnetzbetreiber durch eine Datenverbindung mit der Zulassungsdatenbank überprüfen kann, ob ein Teilnehmer mit einer bestimmten Teilnehmernummer zugelassen ist, die Mehrwertverbindung aufzubauen, und
- Bereitstellen der Zulassungsdatenbank (1) für wenigstens einen Verbindungsnetzbetreiber.

Alternativ oder zusätzlich umfasst ein Verfahren zur automatischen Freigabe eines Aufbaus einer Mehrwertverbindung, die im offline-billing Verfahren abgerechnet wird, nach der Erfindung die Schritte:
- Aufbau oder Annahme einer Verbindung mit wenigstens einem Teilnehmernetzbetreiber,
- Empfangen von Teilnehmernummern und zugeordneten PIN-Nummern des wenigstens einen Teilnehmernetzbetreibers,
- Füllen einer PIN-Datenbank mit Teilnehmernummern und zugeordneten PIN-Nummern, damit ein Verbindungsnetzbetreiber durch eine Datenverbindung mit der PIN-Datenbank überprüfen kann, ob ein Teilnehmer mit einer bestimmten Teilnehmernummer sich mit einer bestimmten PIN-Nummer verifizieren kann, um die Mehrwertverbindung aufzubauen, und
- Bereitstellen der PIN-Datenbank (3) für wenigstens einen Verbindungsnetzbetreiber.
   Entsprechend umfasst ein System zur automatischen Freigabe eines Aufbaus einer Mehrwertverbindung, die im offline-billing Verfahren abgerechnet wird, nach der Erfindung
- eine erste Schnittstelle zum Aufbau oder zur Annahme einer Verbindung mit wenigstens einem Teilnehmernetzbetreiber und zum Empfangen von Teilnehmernummern des wenigstens einen Teilnehmernetzbetreibers,
- eine Überprüfungseinheit zum Überprüfen, ob die empfangenen Teilnehmernummern jeweils zum offline-billing zugelassen sind,
- eine erste Fülleinheit zum Füllen einer Zulassungsdatenbank mit denjenigen Teilnehmernummern, die zum offline-billing zugelassen sind, damit ein Verbindungsnetzbetreiber durch eine Datenverbindung mit der Zulassungsdatenbank überprüfen kann, ob ein Teilnehmer mit einer bestimmten Teilnehmernummer zugelassen ist, die Mehrwertverbindung aufzubauen, und
- eine zweite Schnittstelle zum Bereitstellen der Zulassungsdatenbank für wenigstens einen Verbindungsnetzbetreiber.
   Alternativ oder zusätzlich umfasst ein System zur automatischen Freigabe eines Aufbaus einer Mehrwertverbindung, die im offline-billing Verfahren abgerechnet wird, nach der Erfindung
- eine dritte Schnittstelle zum Aufbau oder zur Annahme einer Verbindung mit wenigstens einem Teilnehmernetzbetreiber und zum Empfangen von Teilnehmernummern und zugeordneten PIN-Nummern des wenigstens einen Teilnehmernetzbetreibers,
- eine zweite Fülleinheit zum Füllen einer PIN-Datenbank mit Teilnehmernummern und zugeordneten PIN-Nummern, damit ein Verbindungsnetzbetreiber durch eine Datenverbindung mit der PIN-Datenbank überprüfen kann, ob ein Teilnehmer mit einer bestimmten Teilnehmernummer sich mit einer bestimmten PIN-Nummer verifizieren kann, um die Mehrwertverbindung aufzubauen, und
- eine vierte Schnittstelle zum Bereitstellen der PIN-Datenbank für wenigstens einen Verbindungsnetzbetreiber.

In dem Fall, dass ein System zur automatischen Freigabe eines Aufbaus einer Mehrwertverbindung, die im offline-billing Verfahren abgerechnet wird, nach der Erfindung beide zuvor beschriebenen Merkmalsgruppen umfasst, können die erste und die dritte Schnittstelle zusammengefasst und gemeinsam hinsichtlich der Zulassungsdatenbank und der PIN-Datenbank genutzt werden. Dies ist prinzipiell auch jeweils für die erste und die zweite Fülleinheit und die zweite und die vierte Schnittstelle möglich.

Weiter können auch alle Schnittstellen integriert oder als eine Einheit gebildet sein.

Allgemein kann nach der Erfindung die Situation für die VNB und VNB/SP entschärft werden, da über die Zulassungsdatenbank und/oder die PIN-Datenbank mit ihren Zugriffs- und Datenbereitstellungsfunktionen insbesondere angezeigt wird, ob die Entgelte beim Kunden inkassiert werden können.

Die Zulassungsdatenbank oder auch Portierungsdatenbank (DZP - "deutschlandweite zentrale Portierungsdatenbank") wird damit zu einem ein wesentlicher Bestandteil des offline-billing Verfahrens. Über die DZP ist die es möglich zu erfahren, in welchem Netzwerk der Teilnehmer beheimatet ist. An das ermittelte Netz, also an den Teilnehmernetzbetreiber wird schließlich auch der bewertete KF gesendet, wenn nicht auf Grund von besonderen Vereinbarungen zwischen Kunde und VNB/SP (oder VNB) direkt an den Teilnehmer eine Rechnung gesendet werden soll.

TNB und VNB haben so Zugriff auf *eine* zentrale Datensammelstelle und müssen die Portierungsdaten nicht immer mit allen anderen Carriern einzeln und manuell abgleichen (Point to Point Verfahren).

Im UAK "Administrative und betriebliche Abläufe beim Wechsel des Teilnehmernetzbetreibers" ist die lokale Datenbank eines TNB als Delta-Datenbank ausschließlich im Responsezugriff geplant. Ab Mai 2004 besteht die einmalige Gelegenheit aller TNB noch einmal in einem definierten Zeitfenster alle Portierungsdaten aller anderen TNB abzufragen. Es werden für die DZP außerdem folgende Zugriffe vorgegeben:
1. Tagesaktuelle Abfrage (UAK TNB/VNB-Wechsel + DZP): Zu- und Abgänge des Vortages mit Rufnummer und Datum der Portierung. (Der Filezugriff (Transfer) erfolgt im Einfachzugriff) Bei der tagesaktuellen Abfrage werden alle Bewegungen in den Daten zum Vortag sichtbar, es handelt sich also immer um eine Deltadarstellung.
2. Abfrage mit Responsezugriff (UAK TNB/VNB-Wechsel + DZP): (zu bestimmten Daten in der Vergangenheit) Es sind zwei Transfers notwendig (Zweifachzugriff), bei dem zuerst der Request verschickt wird und dann das Ergebnis abgeholt wird. Es ist auch möglich, zusätzlich die Abholung von Wochenfiles anzubieten. Auch bei der Abfrage über den Responsezugriff werden alle Bewegungen in den Daten sichtbar, auch hier handelt sich also immer um eine Deltadarstellung, da immer nur die Aktualisierungen versendet werden.
3. Die Abfrage aller Portierungsdaten (UAK TNB/VNB-Wechsel, eingeschränkt, d. h. einmalig + DZP), also die sogenannte Bestandsdatenabfrage. Der anfragende Netzbetreiber wird hier ein Responsefile ohne Datum senden, es handelt sich also auch um einen Zweifachzugriff. Zu bemerken ist noch, dass hier ein "Schnappschuss" des Bestandes versendet wird. Eine Deltadarstellung ist nur mit eigenem Aufwand möglich. Es ist auch bei der DZP möglich, bei der Abholung der gesamten Bestandsdaten zusätzlich eine Abholung der Bestandsdaten mit eingearbeiteten Rufnummernblockdaten der RegTP anzubieten.
4. Permanente Bereitstellung (nur DZP): Neben dem Zugriff wie unter 1. - 3. beschrieben, können Tagesfiles, Wochefiles und der gesamte Bestand auch permanent bereitgestellt werden.

Als Portierungsdaten sind portierte Rufnummern, Datum der Portierung, die Kennung abgebender TNB, die Kennung aufnehmender TNB und der Status zu betrachten.

Die Zulassungsdatenbank ist vorzugsweise für normalwertige Mehrwertverbindungen vorgesehen, während die PIN-Datenbank vorzugsweise für höherwertige Mehrwertverbindungen vorgesehen ist. Es ist jedoch auch möglich, dass auch die normalwertigen Mehrwertverbindungen mittels einer PIN-Abfrage und/oder die höherwertigen Mehrwertverbindungen lediglich durch die prinzipielle Abrechenbarkeit freischaltbar sind. Auch können die erfindungsgemäße Zulassungsdatenbank und die erfindungsgemäße PIN-Datenbank zusammengefasst werden.

Erfindungsgemäß werden vorzugsweise die folgenden Schritte zur Erstellung der PIN-Datenbank ausgeführt:
- automatisches abfragen von Vertragsinformation von Teilnehmernetzbetreibern mit Faktura wenigstens eines Clearinghauses, die Anzeigen, ob eine Teilnehmernummer für höherwertige Mehrwertdienstleistungen zugelassen ist, und sammeln zugelassener Teilnehmernummern in einer Freigabedatenbank, und/oder manuelle Aufnahme einer Teilnehmernummer eines Teilnehmers nach einem positiv abgeschlossen Überprüfungsverfahren des Teilnehmers in die Freigabedatenbank, und
- automatisches erstellen einer Liste von allen Teilnehmernummern der Freigabedatenbank, die ein positives Bonitäts- und/oder Adressprüfungsverfahren durchlaufen haben, als die PIN-Datenbank.
   Korrespondierend umfasst die zweite Fülleinheit des erfindungsgemäßen Systems vorzugsweise
- eine erste Abfrageeinheit zum automatischen abfragen von Vertragsinformation von Teilnehmernetzbetreibern mit Faktura wenigstens eines Clearinghauses, die Anzeigen, ob eine Teilnehmernummer für höherwertige Mehrwertdienstleistungen zugelassen ist, und sammeln zugelassener Teilnehmernummern in einer Freigabedatenbank, und/oder
- eine erste Aufnahmeeinheit zur manuellen Aufnahme einer Teilnehmernummer eines Teilnehmers nach einem positiv abgeschlossen Überprüfungsverfahren des Teilnehmers in die Freigabedatenbank, und
- eine erste Prüfeinheit zum automatischen übertragen aller Teilnehmernummern der Freigabedatenbank, die ein positives Bonitäts- und/oder Adressprüfungsverfahren durchlaufen haben, in die PIN-Datenbank.

Das erfindungsgemäße Verfahren umfasst vorzugsweise weiter oder alternativ den folgenden Schritt:
- Bereitstellen einer Sperrdatenbank mit Teilnehmernummern, damit ein Verbindungsnetzbetreiber durch eine Datenverbindung mit der Sperrdatenbank überprüfen kann, ob ein Teilnehmer mit einer bestimmten Teilnehmernummer gesperrt ist, die Mehrwertverbindung aufzubauen.
   Korrespondierend umfasst das erfindungsgemäße System vorzugsweise
- eine Sperrdatenbank mit Teilnehmernummern, damit ein Verbindungsnetzbetreiber durch eine Datenverbindung mit der Sperrdatenbank überprüfen kann, ob ein Teilnehmer mit einer bestimmten Teilnehmernummer gesperrt ist, die Mehrwertverbindung aufzubauen.

Erfindungsgemäß werden vorzugsweise die folgenden Schritte zur Erstellung der Zulassungsdatenbank ausgeführt:
- automatisches abfragen und sammeln aller Teilnehmernummern aller Teilnehmernetzbetreiber, um eine Basisdatenbank mit allen vergebenen Teilnehmernummern zu erstellen,
- automatisches validieren aller Teilnehmernummern, um die Eindeutigkeit jeder Teilnehmernummer zu gewährleisten,
- automatisches abfragen von Vertragsinformation von Teilnehmernetzbetreibern mit einer Schnittstelle für fremdbepreiste Mehrwertdienstleistungen und/oder Faktura wenigstens eines Clearinghauses, die Anzeigen, ob eine Teilnehmernummer für normalwertige Mehrwertdienstleistungen zugelassen ist, und sammeln der zugelassenen Teilnehmernummern in einer Vertragsdatenbank, und
- automatisches erstellen einer Liste von allen eindeutigen Teilnehmernummern, die für normalwertige Mehrwertdienstleistungen zugelassen sind, als die Zulassungsdatenbank.
   Korrespondierend umfasst das erfindungsgemäße System vorzugsweise
- eine zweite Abfrageeinheit zum automatischen abfragen und sammeln aller Teilnehmernummern aller Teilnehmernetzbetreiber, um eine Basisdatenbank mit allen vergebenen Teilnehmernummern zu erstellen,
- eine Validierungseinheit zum automatischen validieren aller Teilnehmernummern, um die Eindeutigkeit jeder Teilnehmernummer zu gewährleisten, innerhalb der Überprüfungseinheit,
- eine dritte Abfrageeinheit zum automatisches abfragen von Vertragsinformation von Teilnehmernetzbetreibern mit einer Schnittstelle für fremdbepreiste Mehrwertdienstleistungen und/oder Faktura wenigstens eines Clearinghauses, die Anzeigen, ob eine Teilnehmernummer für normalwertige Mehrwertdienstleistungen zugelassen ist, und sammeln der zugelassenen Teilnehmernummern in einer Vertragsdatenbank, innerhalb der Überprüfungseinheit, und
- eine zweite Prüfeinheit zum automatischen übertragen von allen eindeutigen Teilnehmernummern, die für normalwertige Mehrwertdienstleistungen zugelassen sind, in die Zulassungsdatenbank, innerhalb der ersten Fülleinheit.

Erfindungsgemäß wird weiter vorzugsweise der folgende Schritt zur Erstellung der Zulassungsdatenbank ausgeführt:
manuelle Aufnahme einer Teilnehmernummer eines Teilnehmers nach einem positiv abgeschlossen Überprüfungsverfahren des Teilnehmers.

Korrespondierend umfasst die erste Fülleinheit des erfindungsgemäßen Systems weiter vorzugsweise
- eine zweite Aufnahmeeinheit zur manuellen Aufnahme einer Teilnehmernummer eines Teilnehmers nach einem positiv abgeschlossen Überprüfungsverfahren des Teilnehmers in die Zulassungsdatenbank.

Bei dem erfindungsgemäßen Verfahren sieht vorzugsweise die Datenverbindung eine Übertragung einer jeweiligen vollständigen Datenbank an einen Verbindungsnetzbetreiber, damit dieser eine offline-Überprüfung einer Teilnehmernummer durchführen kann, und/oder eine online-Überprüfung einer Teilnehmernummer durch einen Verbindungsnetzbetreiber vor.

Korrespondierend umfasst die zweite und/oder vierte Schnittstelle des erfindungsgemäßen Systems weiter oder alternativ vorzugsweise
- eine Datenverbindungsschnittstelle, mit der eine Übertragung einer jeweiligen vollständigen Datenbank an einen Verbindungsnetzbetreiber durchgeführt werden kann, damit dieser eine offline-Überprüfung einer Teilnehmernummer durchführen kann, und/oder mit der eine online-Überprüfung einer Teilnehmernummer durch einen Verbindungsnetzbetreiber durchgeführt werden kann.

Nach der Erfindung ist eine Überprüfung eines Verbindungsnetzbetreibers, ob ein Teilnehmer mit einer bestimmten Teilnehmernummer zugelassen ist, die Mehrwertverbindung aufzubauen, vorzugsweise in einem Zeitabschnitt unterhalb einer Minute durchführbar. Die Bereitstellung erfolg deshalb in einer sogenannten "Hotlist".

Im folgenden wird eine bevorzugte Ausführungsform der Erfindung unter Bezugnahme auf die beigefügten Zeichnungen beispielhaft erläutert. Es zeigen:
- Figur 1: Zusammenhänge zwischen DZP und ZAST900;
- Figur 2: einen Verbindungsaufbau mit IN System des VNB/SP in vereinfachter Darstellung;
- Figur 3: einen einfachen IN Vermittlungsprozess;
- Figur 4: die IN Funktion, die um die erfindungsgemäße DZP-WL erweitert ist;
- Figur 5: einen einfachen IN Vermittlungsprozess nach der Erfindung, der um die DZP-WL Prüfung erweitert ist;
- Figur 6: die IN Funktion erweitert um erfindungsgemäße DZP-WL, ZAST900-WL, RSP-DB sowie KK Validierung; und
- Figur 7: einen einfachen IN Vermittlungsprozess nach der Erfindung, der um die DZP-WL, ZAST900 WL, RSP-DB und KK Prüfung erweitert ist.

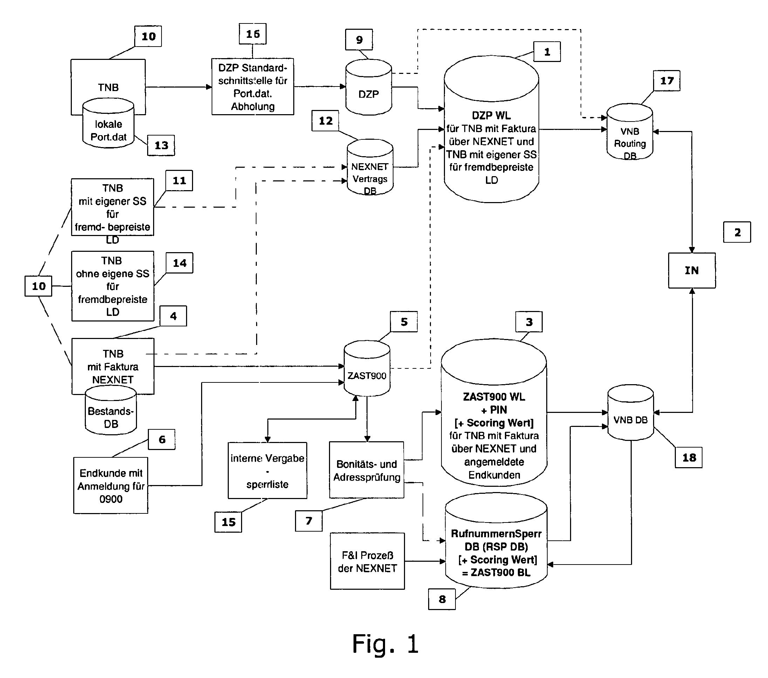

Figur 1 zeigt die Datenbankzusammenhänge und Datengenerierung bei der beispielhaften bevorzugten erfindungsgemäßen Ausführungsform. Hier sind die Basisbank 9 mit DZP, die Freigabedatenbank mit ZAST900 die Vertragsdatenbank 12 mit NEXNET Vertrags DB, die Zulassungsdatenbank 1 mit DZP WL, die PIN-Datenbank 3 mit ZAST900 WL + PIN und die Sperrdatenbank 8 mit RSP DB bezeichnet.

Die DZP (Deutschlandweite Zentrale Portierungsdatenbank) 9 und die ZAST900 (Zentrale Anmeldstelle für Mehrwertdienste in der Gasse 0900) 5 stellen zwei unabhängige Datenbanksysteme dar, die über interne Verknüpfungen verfügen. Es wird im folgenden Abschnitt beschrieben, durch welche Daten und Ereignisse beide Datenbanken 9, 5 verknüpft sind und wie sie gefüllt werden.

Die DZP 9 ist eine Datenbank, die ausschließlich mit Portierungsdaten gefüllt wird. Zur Datenerzeugung wird die Datenbank einmalig mit den RegTP-Daten, d.h. Daten der Regulierungsbehörde für Telekommunikation und Post, u. a. staatliches Kontrollorgan des BMWA zur Prüfung der gesetzlichen Regeln zur Schaffung eines offenen und fairen Wettbewerbs im Telekommunikationssektor und bei der Post, der Teilnehmernetzbetreiberblockzuordnung gefüllt. In regelmäßigen Abständen werden bei der RegTP Datenzuordnungsänderungen erzeugt, publiziert und überschreiben. Dies betrifft nur die originäre Blockzuordnung, niemals aber portierte Rufnummern. Die Datenzuordnungsänderungen werden in sogenannten Deltafiles bei der RegTP bereitgestellt. Die Deltafiles werden regelmäßig in die DZP 9 eingespielt.

Wie in der Figur 1 dargestellt, werden durch die TNB, d.h. Teilnehmernetzbetreiber 10, also Netzbetreiber, die Teilnehmeranschlüsse von Endkunden physikalisch anschalten, arbeitstäglich lokale Portierungsdaten 13 bereitgestellt. Die lokalen Portierungsdaten 13 der jeweiligen TNB 10 werden über die im UAK TNB/VNB-Wechsel (UAK TNB/VNB-Wechsel = Unterarbeitskreis Teilnehmernetzbetreiber / Verbindungsnetzbetreiberwechsel des AKNN (Arbeitskreis für technische und betriebliche Fragen der Numerierung und Netzzusammenschaltung) Der o.a. UAK hat u.a. die Regeln für die Portierung in Deutschland festgelegt. Das Regelwerk des UAK wurde von der RegTP anschließend verfügt.) beschriebene, standardisierte Schnittstelle 16 des dezentralen Verfahrens abgeholt, validiert (nach bestimmten Regeln) und unter der Beachtung ihrer Historie in die DZP 9 eingestellt.

Es findet außerdem eine Bewertung von den verfügbaren TNB 10 am TK-Markt, d.h. Telekommunikartions-Markt, statt, bei denen eine Aufteilung in drei Kategorien vorgenommen wird:
1)TNB 11 mit eigener Schnittstelle (SS) zur Annahme für fremdbepreiste Leistungsdaten (LD),
2)TNB 14 ohne eigene Schnittstelle (SS) zur Annahme für fremdbepreiste Leistungsdaten (LD), und
3)TNB 4 mit der Faktura Dienstleistung über NEXNET ohne eigene Schnittstelle (SS) zur Annahme für fremdbepreiste Leistungsdaten (LD).

Da die TNB 10 der ersten und dritten Kategorie in der Lage sind Offline-Billing für u.a. 0900 durchzuführen und abzurechnen, werden die betroffenen TNB 11, 4 in einer NEXNET Vertrags DB 12 als "Positivfälle" geführt. Natürlich kann auch der Fall auftreten, daß ein TNB 11 mit eigener SS die Faktura DL (Dienstleistungen) der NEXNET, d.h. des Betreibers des hier beschriebenen Verfahrens und der Hier beschriebenen Datenbankanordnung, in Anspruch nehmen will. TNB 14 ohne eigene SS oder andere Abrechnungsmöglichkeit werden nicht in der NEXNET Vertrags DB 12 geführt.

Die DZP Whitelist 1 (DZP WL) ist eine Datenbank, die aus der DZP 9 und aus der NEXNET Vertrags DB 12 gebildet wird, beide Datenbanken werden zur Erzeugung logisch "UND" verknüpft. Ein Teilnehmeranschluß wird demnach nur in der DZP WL 1 geführt, wenn ein TNB in der Lage ist, entweder fremdbepreiste LD (Leistungsdaten) selbst oder über die NEXNET zur Abrechnung zu bringen und gültige DZP Informationen über die Einordnung einer Rufnummer vorliegen.

Es besteht weiter die Möglichkeit eine Einzelanmeldung eines Teilnehmers 6 bezüglich der DZP WL 1 durchzuführen. Dies wird in der weiteren Beschreibung in Zusammenhang mit der Erstellung der ZAST900 5 erläutert.

Für einen VNB 2 stehen so zwei Datenarten aus der DZP bereit, um eine Abrechenbarkeit von insbesondere niedrigpreisigen Mehrwertverbindungen zu überprüfen:

Die Portierungsdaten aus der DZP 9 und die DZP-WL 1 Daten für den Fall, in dem eine Abrechnung über die NEXNET erfolgen kann oder der TNB 11 selbst dazu in der Lage ist.

Die Abholung der Daten durch einen VNB 2 muss allerdings noch für ein multilaterales Umfeld am TK-Markt spezifiziert werden, insofern nicht auf NEXNET spezifische Prozesse zur Bereitstellung (für VNB 2), ähnlich den TNB Prozessen zurückgegriffen werden soll. Grund ist eine fehlende TNB/Portierungskennung der VNB 2, die sie eigentlich nicht für einen Zugriff auf TNB Portierungsdaten 13 berechtigt.

Allerdings sind fast alle VNB 2 auch TNB 10 und somit mit einer entsprechenden TNB Portierungskennung ausgestattet, die sie zu einem legitimen Austausch von Portierungsdaten berechtigen.

Die DZP WL 1 ist eine rein abrechnungstechnische Liste, sie weist keinerlei Prüfkriterien auf die Solvenz eines Endteilnehmers aus.

Die ZAST900 5 ist eine Datenbank für die Nutzung von hochpreisigen Mehrwertdiensteverbindung und ergänzt vorzugsweise eine Anmeldung aus der DZP-WL 1.

Es gibt zwei verschiedene Arten, Datensätze für die ZAST900 5 zu erzeugen. Beim ersten Verfahren meldet ein TNB 4 seine Endkunden per Standardverfahren oder nach vorheriger Voranmeldung seines Endkunden direkt selbst an. Für die NEXNET gilt die Anmeldung dann im Falle eines TNB-Vertragspartners dann auch als Anmeldung in der NEXNET Vertrags DB 12 und damit auch in der DZP-WL 1. Beim zweiten Verfahren meldet sich ein Endteilnehmer 6 direkt bei der ZAST900 Anmeldestelle an und dies unabhängig von seinem TNB 10. Nach den entsprechenden Prüfverfahren würde die NEXNET an der NEXNET Vertrags DB 12 für TNB vorbei, einen manuellen Eintrag in der DZP-WL 1 generieren.

Da das ZAST900 Verfahren auch eine provisorische Anmeldung vorsieht, die nach der Prozessbeschreibung vorzugsweise aber nur einmalig geschehen darf, existiert an die ZAST900 5 angeschlossen eine interne Vergabesperrliste 15 für provisorische Mehrfachanmeldungen, deren Generierung hier nicht näher erläutert ist. Nach der Eintragung der Endteilnehmerdaten erfolgt eine obligatorische Bonitäts- und Adressprüfung 7. Nach erfolgter Prüfung wird der Teilnehmer mit der erhaltenen (zunächst provisorischen) PIN, seinen angemeldeten Anschlussrufnummern und seiner Bonitätsbewertung in die ZAST900 WL 3 eingetragen. Die ZAST900 WL 3 steht den VNB 2 mit A-Rufnummer, PIN und ggf. Bonitätseinstufung (Scoringwert) zur Verfügung. Ggf. auf speziellen Kundenwunsch auch als Hotlist, die im Abstand 5-10 Minuten aktualisiert wird.

Eine schlechte Zahlungsmoral, Erfassung bei Mahnprozessen der NEXNET oder eine Inkassoübergabe des Kunden stellt den Kunden zusätzlich in eine RufnummernSperr DB 8 (RSP DB), die auch als ZAST 900 Blacklist (ZAST900 BL) bezeichnet wird und den VNB 2 ebenfalls zur Verfügung gestellt wird.

Auf diese Weise kann der VNB 2 je nach Realisierung jeweils intern oder extern auf eine VNB Routing DB 17, die die Daten der DPZ 9 und der DZP WL 1 umfasst, und eine VNB DB 18 zugreifen, die die Daten der ZAST900 WL 3 und der RSP DB 8 umfasst.

Der Kunde wird nicht aus der ZAST900 WL 3 entfernt, da seine Anmeldung weiter Bestand hat, allerdings sein Bonitätsprüfwert verschlechtert wurde.

Eine mehrfach falsche PIN Eingabe bei einem VNB 2 erzwingt eine Rückmeldung des VNB 2 und lässt auf einen Anschlussmissbrauch schließen. Durch mehrfache Falscheingabe wird automatisch ein ZAST900 BL Eintrag generiert, der manuell im ZAST900 Prozess zurückgenommen werden muss.

Wählt der Kunde die Bezahlart der Kreditkarte (in der PIN kodiert), so muss bei jedem Verbindungsaufbau das Bonitätsprüfmodul über den Weg VNB-NEXNET-Kreditkartenprüfstelle angestoßen werden.

Es gilt die generelle Regel, dass ein Kunde zwar in der DZP 9 registriert sein kann, aber nicht in der ZAST900 WL 3 eingetragen ist, aber niemals umgekehrt.

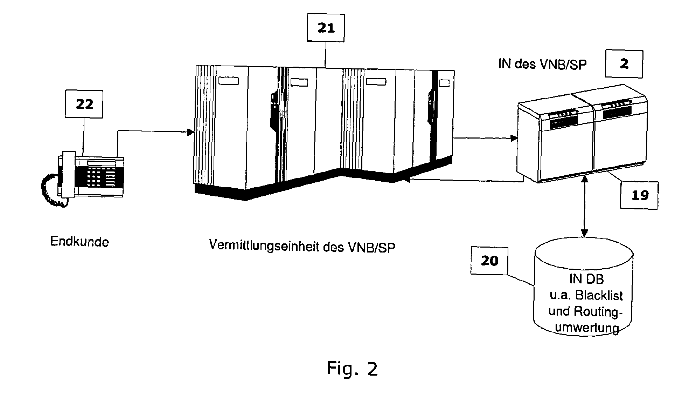

Der in Figur 2 vereinfacht dargestellte heute praktizierte Callaufbau, d.h. Aufbau einer Telefonverbindung für Mehrwertdienste, eines VNBs 2 greift weder auf eine DZP 9 noch auf eine ZAST900 5 zurück.

Sollte im Netz des VNB/SP eine Blacklistfunktion realisiert sein, so wird die Blacklist in der Regel im IN-System 19 des VNB/SP hinterlegt, insofern es sich um Verbindungen zu Mehrwertdiensten handelt. IN steht hier für Intelligent Network, wobei die Intelligente Netzwerkfunktion einfache Vermittlungsnetze um höherwertige Netz- und Diensteeigenschaften erweitert. Das ZGS7, d.h. das Zeichengabesystem Nr. 7, ein digitales Zeichengabesystem zur Realisierung des ISDN und der digitalen Vermittlungsdienste, arbeitet nicht mehr nur mit dem ISUP Protokoll, sondern wird um den INAP ergänzt, d.h. dem IN-Applikationpart als Nutzer des ZGS7 für die Realisierung höherwertige Netzdienste, also um ein Protokoll. Damit sind höherwertige Dienste und Netzleistungen für den Betreiber möglich. Befinden sich Anrufer in der Liste die gesperrt werden sollen, so wird auch hier im Rahmen des Routing eine entsprechende Blockierung anhand der A-Rufnummer durchgeführt.

In der hier gewählten stark vereinfachten Darstellung findet die Überprüfung und ggf. der Abwurf in die an das IN gekoppelte Vermittlungseinheit 21 statt.

Die Routing DB zur Rufnummernumsetzung der Diensterufnummer auf die geographische Rufnummer und die Blacklist zur Diensteabweisung fallen im hier gewählten Beispiel in die gleiche Datenbank 20. Das Beispiel und auch die folgende Prozessdarstellung sind nur ein exemplarisches Beispiel, um die Besonderheiten eines Routings darzustellen, wenn eine DZP 9 und/oder ZAST900 5 in ein TK-Netzwerk integriert sind.

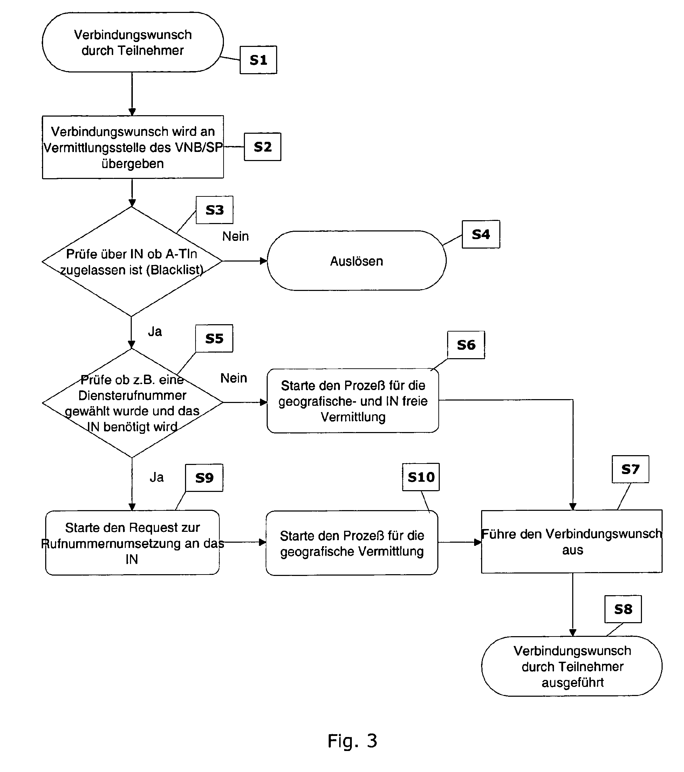

Figur 3 zeigt eine vereinfachte mögliche Prozessdarstellung eines virtuellen VNB 2. In einem ersten Schritt S1 wird der Verbindungswunsch eines Teilnehmers 22 von seinem TNB ausgewertet und in einem folgenden zweiten Schritt S2 zu dem VNB/SP 2 weitervermittelt, bei dem die Diensterufnummer (bzw. zum VNB im C-b-C Fall) geschaltet ist. (Der TNB muss darüber Kenntnis haben, in welchem VNB Netz der Dienst realisiert ist und dann (wenn technisch möglich) direkt das Zielnetz routen. Der C-b-C Fall entspricht dem, nur die Suche des VNB Zielnetz entfällt, da der Teilnehmer 22 durch seine C-b-C Wahl den Ziel-VNB definiert.)

Der Verbindungswunsch wird dem VNB/SP 2 übergeben. Der VNB, VNB/SP 2 prüft anschließend in einem dritten Schritt S3, ob die A-Rufnummer aus dem Verbindungsaufbauversuch in seiner Blacklist registriert ist. Sollte das der Fall sein, so wird die Verbindung in einem vierten Schritt S4 ausgelöst. Es besteht natürlich alternativ auch die Möglichkeit mit einer Whitelist oder ganz ohne Zulassungskontrollen zu arbeiten. Der Einsatz eines IN-Systems zur Black-/Whitelistprüfung ist auch nicht zwingend erforderlich.

Ist die A-Rufnummer aus dem Verbindungsaufbauversuch nicht in seiner Blacklist registriert so steht in einem nächsten fünften Schritt S5 die Überprüfung der gewählten Rufnummer an. Hierzu evtl. notwendige weitere Schritte zur Diensterufnummernportierungsprüfung und Implementierung der Rufnummer im eigenen Netz, sowie mögliche Alternativreaktion sind in dem dargestellten vereinfachten Prozess nicht gezeigt.

Stellt die Vermittlungseinheit in dem fünften Schritt S5 fest, dass es sich um eine geographische Rufnummer oder eine IN freie Vermittlung handelt (Diensterufnummern wie Notrufe etc., die kein IN-System benötigen), so wird in einem sechsten Schritt S6 ein Prozess für die geografische und IN freie Vermittlung gestartet und der Verbindungswunsch anschließend direkt in einem siebten Schritt S7 durch den VNB/SP 2 sowie in einem achten Schritt S8 durch den Teilnehmer 22 ausgeführt. Wird jedoch in dem fünften Schritt S5 festgestellt, dass es sich um eine Mehrwertdiensterufnummer handelt, so werden in einem neunten Schritt S9 komplexere IN-Prozesse über den INAP gestartet, wobei das IN versucht, die Diensterufnummer in eine geographische Rufnummer umzusetzen und dazu in einem zehnten Schritt S10 den Rufnummernübersetzungsprozeß startet, der aus der Diensterufnummer eine geographische Routinginformation anliefert.

Läßt sich die Nummer einwandfrei übersetzen, so wird der Verbindungswunsch mit dem obigen siebten Schritt S7 und achten Schritt S8 durch den VNB/SP und den Teilnehmer 22 ausgeführt.

Einzelheiten des Ratings oder IN-Ratings sind hier nicht beschrieben.

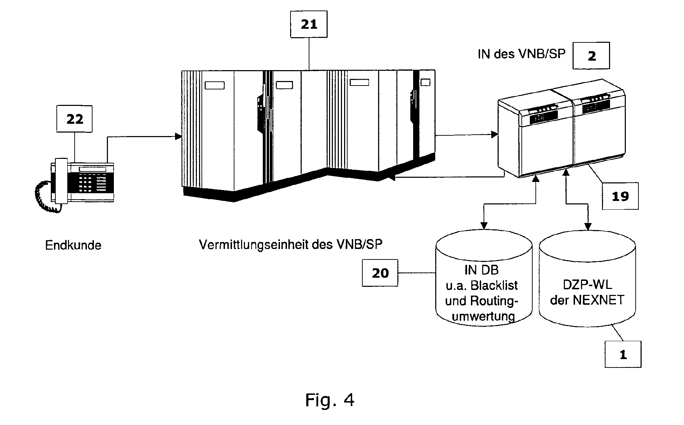

Figur 4 zeigt die Vermittlung von relativ niederpreisigen Mehrwertdiensteverbindungen im Offline-Billing. Bei niedrigpreisigen IN-Verbindungen in Offline gebillten Rufnummerngassen steht nach der Erfindung eine weitere, mögliche Abfrage bevor. Der VNB/SP 2 sollte eine Prüfung vornehmen, ob der Endteilnehmer abrechenbar ist. Die Prüfung geschieht über eine Abfrage der DZP-Whitelist 1.

Rufnummern die in der DZP-WL 1 vorhanden sind, können auf jeden Fall für Offline-Billing Dienste abgerechnet werden, da es entweder Vereinbarungen eines TNBs 10 oder eines Endkunden 6 über eine direkte oder über eine CH Abrechnung gibt, dennnach Fig. 1 werden die Rufnummern eines Teilnehmers nur dann in die DZP WL geschrieben, wenn die NEXNET Vertrags DB 12 zu erkennen gibt, daß eine direkte Abrechnung mit dem TNB 11 oder eine CH Abrechnung 4 möglich ist. Eine direkte Endkundenanmeldung 6 über die ZAST900 5 würde ggf. auch eine CH Abrechnung bedeuten.

Greift ein Netzbetreiber auf die Ressource DZP 9 und DZP-WL 1 zu, so wird im Unterschied zu dem in den Figuren 2 und 3 dargestellten Schema und Verfahren neben seiner Standard IN DB 20 noch die DZP-WL 1 parallel (oder z. B. als integraler Bestandteil 17 der IN DB) implementiert. Der Datenabgleich zwischen dem Master (DZP-WL 1 der NEXNET) und der DB 20 des VNB/SP 2 kann täglich, ggf. auch mehrmals täglich erfolgen.

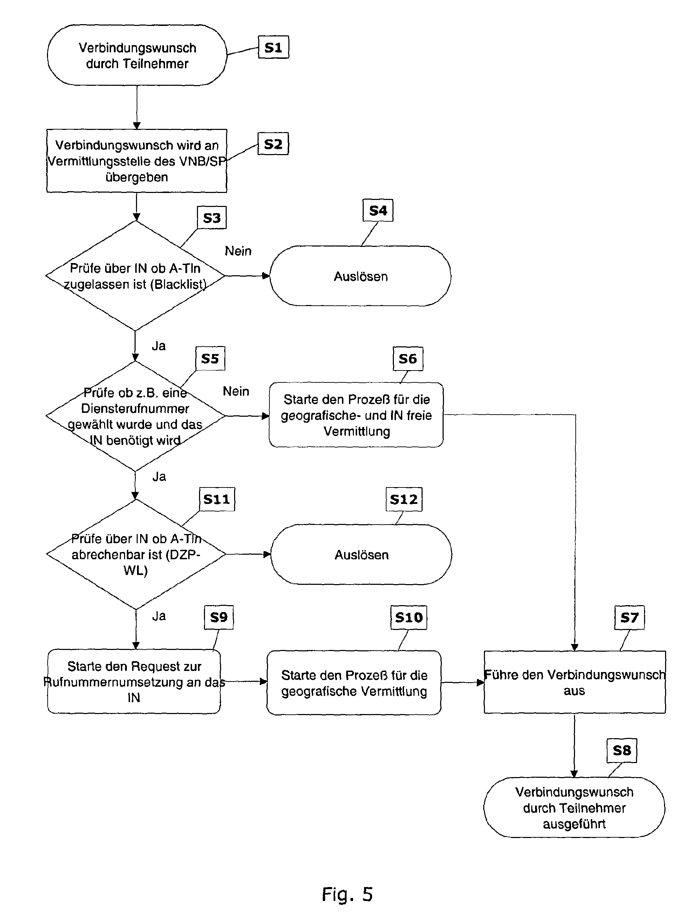

In der vereinfachten möglichen Prozessdarstellung (Fig. 5) eines virtuellen VNB 2 mit Prüfung der DZP-WL 1 werden die ersten bis zehnten Schritte S1 bis S10 prinzipiell gleich zu dem in der Figur 3 dargestellten Verfahren ausgeführt. Zur Überprüfung der DZP WL 1 wird nach der Feststellung in dem fünften Schritt S5, dass es sich um eine Mehrwertdiensterufnummer handelt, noch eine Überprüfung der DZP WL 1 ausgeführt, bevor in dem neunten Schritt S9 komplexere IN-Prozesse über den INAP gestartet werden und der Prozess wie oben beschrieben fortläuft.

Hierzu wird in einem elften Schritt S11 eine Prüfung ausgeführt, ob die A-Rufnummer, d.h. die Rufnummer des Teilnehmers oder Endkunden 22, in der DZP-WL 1 eingepflegt ist. Ist das nicht der Fall, so ist die Rufnummer nicht abrechenbar und die Verbindung wird in einem folgenden zwölften Schritt S12 ausgelöst. Es können von dem VNB/SP2 natürlich außerdem (hier nicht dargestellt) A-Nummern aus dem eigenen Netz zugelassen werden, die nicht in der DZP-WL 1 integriert sind, insofern der VNB/SP 2 auch noch als TNB agiert.

Wird in dem elften Schritt S11 eine A-Rufnummer in der DZP-WL 1 gefunden, so kann der VNB/SP 2 davon ausgehen, dass der TNB 10 eine entsprechende Schnittstelle zur Aufnahme von fremdbepreisten LD besitzt, respektive über ein Clearinghouse abrechnet, was aber nicht zwingend erforderlich ist. In dem Fall der Abrechenbarkeit wird der Prozess mit dem neunten Schritt S9 wie oben beschrieben fortgesetzt.

Auch hier wird auf die Einzelheiten des Ratings oder IN-Ratings nicht eingegangen.

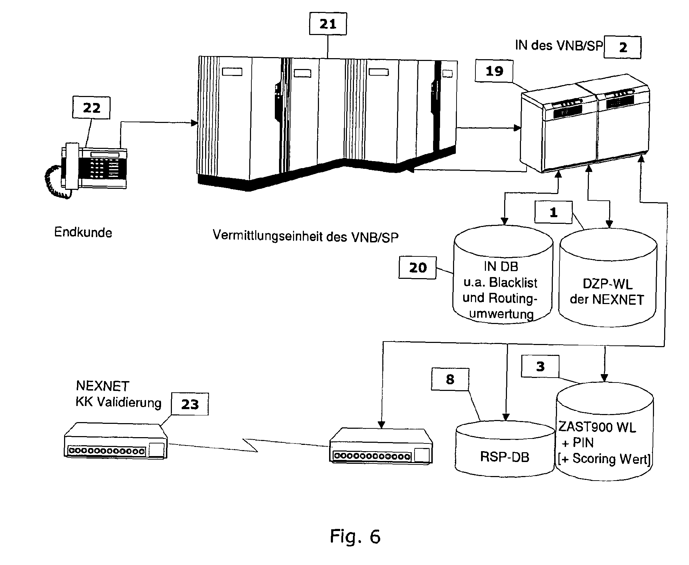

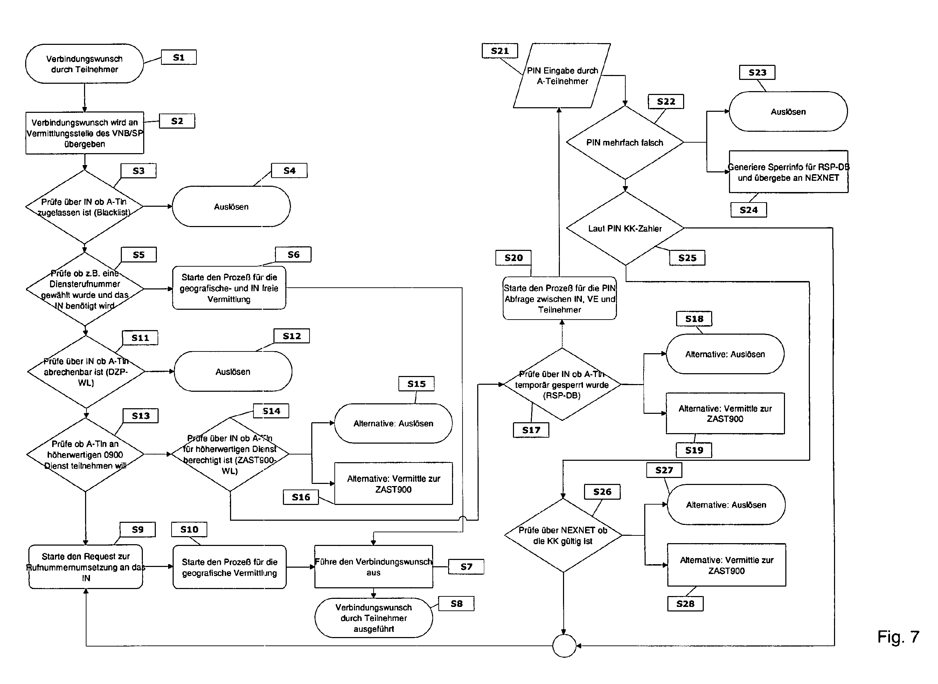

Die Figuren 6 und 7 zeigen die Vermittlung von hochpreisigen Mehrwertdiensteverbindungen im Offline-Billing. Bei hochpreisigen IN-Verbindungen in Offline gebillten Rufnummerngassen stehen zu der in den Figuren 4 und 5 dargestellten zusätzlichen Abfrage im elften Schritt S11 nach der Erfindung noch weitere zusätzliche mögliche Abfragen offen. Neben der zuvor beschriebenen Prüfung zur Abrechenbarkeit aus der DZP WL 1, existiert hier auch noch die Möglichkeit zur Zulassungsprüfung für das Hochpreissegment bei den Mehrwertdiensten.

Auch hier sollte der VNB/SP 2 nach der Ausführung der oben beschriebenen Schritte, d.h. nach der Feststellung in dem fünften Schritt S5, dass es sich um eine Mehrwertdiensterufnummer handelt, zunächst die Prüfung im elften Schritt S11 vornehmen, ob der Endteilnehmer abrechenbar ist. Die Prüfung geschieht über eine Abfrage der DZP-Whitelist 1.

Im Anschluss oder auch direkt als Alternative (je nach Implementierung beim VNB/SP 2) kann der VNB/SP 2 Informationen zur A-Rufnummer aus der ZAST900 WL 3 erhalten. Die Informationen bestehen neben der A-Rufnummer aus einer PIN und optional aus einem Scoringwert. Informationen über einen Kunden der noch Rechnungen offen hat oder der seine PIN mehrfach falsch eingegeben hat, sind der RSP-DB 8 (Rufnummernsperr-DB oder auch DZP-BL) zu entnehmen.

Rufnummern die in der DZP-WL 1 vorhanden sind, können für Offline-Billing Dienste abgerechnet werden, da es entweder Vereinbarungen eines TNB 10 oder eines Endkunden 6 über eine direkte oder über eine CH Abrechnung gibt.

Rufnummern die in der ZAST900 WL 3 vorhanden sind, berechtigen den Teilnehmer zu einer Teilnahme der Nutzung an höherpreisigen Mehrwertdiensten. Die PIN ist mittlerweile auch durch die RegTP vorgeschlagen worden. Der Scoringwert ist optional.

Rufnummern die in der RSP-DB 8 vorhanden sind, schließen den Teilnehmer temporär wieder von der Nutzung der höherpreisigen Mehrwertdienste aus.

Bei der Realisierung ist es vorteilhaft, die A-Rufnummer generell nicht aus der ZAST900 WL 3 zu entfernen, falls der Fall einer temporären Sperre besteht. Dafür gibt es mehrere Gründe:
- Der Anschluß bzw. die A-Rufnummer ist und bleibt angemeldet.
- Die PIN Vergabe ist erfolgt. Bei einer Wiederfreischaltung müsste sonst der ganze PIN-Vergabeprozeß neu gestartet werden.
- Der Scoringwert ist ermittelt und bleibt gespeichert.

Dem VNB/SP 2 wird empfohlen, beide Datenbanken zu implementieren (bzw. abzufragen) und eine Zugangssperre zu höherpreisigen Mehrwertdiensten zu verhängen, wenn der Request an die Datenbanken im Rahmen einer logischen UND-Verknüpfung ein positives Ergebnis liefert.

Die letzte und hier ebenfalls integrierte Abfrage ist die Kreditkartenvalidierung 23 (KK Validierung). Damit werden, falls in der PIN die Zahlart Kreditkarte implementiert ist, die Kreditkartendaten Online zwischen den Systemen des VNB 2, der NEXNET und den Kreditkartengesellschaften validiert. Die Kreditkartenlösung ist optional.

In der in den Figuren 6 und 7 gezeigten vereinfachten möglichen Prozessdarstellung eines virtuellen VNB 2 mit DZP-WL 1, ZAST900 WL 3 und RSP-DB 8 Prüfung wird das in den Figuren 2 und 3 beschriebene Verfahren mit den ersten bis zehnten Schritten S1 bis S10, sowie das in den Figuren 4 und 5 beschriebene Verfahren mit den zusätzlichen elften und zwölften Schritten S11 und S12 identisch ausgeführt. Zusätzlich wird in dieser Ausführungsform zwischen dem elften Schritt S11 und dem neunten Schritt S9, d.h. nach der mittels der DZP WL 1 durchgeführten positiven Überprüfung, ob der A-Teilnehmer abrechenbar ist, noch der nachfolgend beschriebene Prozessablauf ausgeführt, mit dem überprüft wird, ob der A-Teilnehmer zu einem höherwertigen Mehrwertdienst berechtigt ist. Wie zuvor angedeutet, kann diese Überprüfung auch direkt vor oder anstelle des elften Schritts S11 ausgeführt werden.

Bei einer Überprüfung anstelle des elften Schritts S11 entfällt die DZP-WL Prüfung, wobei sich ein VNB/SP 2 dann nur auf die ZAST900-WL 3 verlässt. Dies gilt insbesondere für den Fall, dass nur das Hochpreissegment angeboten wird. Allerdings ist das Auslassen eines Schrittes S11 für den VNB/SP nicht zu empfehlen, da alle Folgeschritte für ihn wesentlich aufwendiger sind. Ggf. kann er durch die Anwendung des Schrittes S11 die aufwendige Doppelprüfung in der RSP-DB und ZAST900 WL vermeiden.

Zur Überprüfung, ob die A-Rufnummen für hochpreisige Mehrwertdienste zugelassen ist, wird in einem dreizehnten Schritt S13 eine Überprüfung der gewählten Rufnummer ausgeführt. Ist die gewählt Mehrwertdiensterufnummer dem Niedrigpreissegment zuzuordnen, so kann die "normale" Vermittlung, die auch bereits weiter oben beschrieben wurde, mit der Ausführung des neunten Schritts S9 durchgeführt werden, wonach und das IN 19 mit den oben beschriebenen zehnten, siebten und achten Schritten S10, S7, S8 den Verbindungswunsch ausführt.

Ist die gewählte Rufnummer allerdings dem Hochpreissegment zuzuordnen, so wird in einem vierzehnten Schritt S14 geprüft, ob der A-Teilnehmer für höherwertige Dienste zugelassen ist. Ist das nicht der Fall, so wird die Verbindung in einem fünfzehnten Schritt S15 ausgelöst, bzw. alternativ in einem sechzehnten Schritt S16 zu einem ZAST900 Call Center für die Anmeldung umgeroutet. Die Prüfung in vierzehnten Schritt S14 erfolgt über die ZAST900 WL 3.

Wird im vierzehnten Schritt S14 festgestellt, dass der Teilnehmer bereits laut ZAST900 WL 3 zugelassen ist, so wird anschließend in einem siebzehnten Schritt S17 in der RSP-DB 8 geprüft, ob der Teilnehmer temporär gesperrt wurde. Gründe können z. B. ein nicht ausgeglichenes Konto für seine Rechnung, ein zu niedriger Scoringwert für den Dienst (falls die Option implementiert wurde) oder eine mehrfach falsch eingegeben PIN sein. Befindet sich eine A-Rufnummer in der RSP-DB 8, so wird in einem achtzehnten Schritt S18 die Verbindung ausgelöst, bzw. alternativ in einem neunzehnten Schritt S19 der Kunde mit dem ZAST900 Call Center verbunden.

Ist die RSP-DB Prüfung im siebzehnten Schritt S17 negativ, so wird das Verfahren zur PIN Auswertung in dem anschließenden zwanzigsten Schritt S20 gestartet. In der Regel übergibt das IN-System 19 die PIN an die (nicht dargestellte) Vermittlungseinheit (VE) zur Prüfung mit dem Endteilnehmer, der in einem einundzwanzigsten Schritt S21 zunächst die PIN Eingabe ausführt.

Wird in einem anschließenden zweiundzwanzigsten Schritt S22 festgestellt, dass die PIN mehrfach falsch angegeben wurde, so wird in einem dreiundzwanzigsten Schritt S23 die Verbindung ausgelöst, bzw. alternativ oder zusätzlich in einem vierundzwanzigsten Schritt S24 eine Sperrinformation für die RSP-DB 8 erzeugt und an die NEXNET übergeben.

Wurde in dem zweiundzwanzigsten Schritt S22 festgestellt, dass die PIN korrekt eingegeben wurde, so erfolgt anschließend in einem fünfundzwanzigsten Schritt S25 eine Überprüfung der PIN auf die Zahlart. Zeigt die Prüfung an, dass es sich um einen Kreditkartenzahler handelt, so wird in einem folgenden sechsundzwanzigsten Schritt S26 an die NEXNET zwecks Online-Validierung der Kreditkarte eine entsprechende Validierungsanfrage gestartet. Handelt es sich nicht um einen KK-Zahler, so kann die "normale" Vermittlung, die auch bereits weiter oben beschrieben wurde, mit der Ausführung des neunten Schritts S9 durchgeführt werden, wonach und das IN 19 mit den oben beschriebenen zehnten, siebten und achten Schritten S10, S7, S8 den Verbindungswunsch ausführt.

Stellt sich in dem fünfundzwanzigsten Schritt S25 heraus, dass es sich um einen KK-Zahler handelt, so wird in dem sechsundzwanzigsten Schritt S26 die KK-Nummer die entweder hinterlegt wurde oder Online abgefragt wird über die NEXNET geprüft. Eine ungültige Nummer, eine gesperrte Karte, etc. führt zum Auslösen der Verbindung in einem folgenden siebenundzwanzigsten Schritt S27 resp. zu einer Weitervermittlung zur ZAST900 Betreuung in einem folgenden achtundzwanzigsten Schritt S28.

Bei einer positiven Onlineabfrage im sechsundzwanzigsten Schritt S26 wird auch hier die "normale" Vermittlung, die auch bereits weiter oben beschrieben wurde, mit der Ausführung des neunten Schritts S9 durchgeführt werden, wonach und das IN 19 mit den oben beschriebenen zehnten, siebten und achten Schritten S10, S7, S8 den Verbindungswunsch ausführt.

Auch hier wird auf die Einzelheiten des Ratings oder IN-Ratings nicht eingegangen.

Nachfolgend werden die zwischen der DZP und der ZAST900 existierenden sechs automatisierten Schnittstellen, die eine Verbindung der DZP und ZAST900 nach außen zulassen, beschrieben.

Alle anderen Schnittstellen sind vorzugsweise reine Prozessschnittstellen, bzw. im Hinblick auf den Endkunden ggf. webbasiert, die auf einen telefonischen oder schriftlichen Customer Service Kontakt ausgelegt sind. Es ist jedoch möglich, auch diese anderen Schnittstellen entsprechend der nachfolgenden Beschreibung zu automatisieren.

Die automatisierten Schnittstellen sind die:
1. Schnittstelle zwischen TNB und DZP zur Anlieferung von Portierungsdaten.
   [Diese Schnittstelle ist in der Figur 1 als "DZP Standardschnittstelle 16 für Portierungsdaten Abholung" und in der obigen allgemeinen Beschreibung der Erfindung als erste Schnittstelle bezeichnet.]
2. Schnittstelle zwischen DZP und der VNB Routing DB
3. Schnittstelle zwischen DZP-WL und der VNB Routing DB
   [Diese Schnittstelle ist in der obigen allgemeinen Beschreibung der Erfindung als zweite Schnittstelle bezeichnet.]
4. Schnittstelle zwischen ZAST900 WL und der VNB DB
   [Diese Schnittstelle ist in der obigen allgemeinen Beschreibung der Erfindung als vierte Schnittstelle bezeichnet.]
5. Schnittstelle zwischen RSP DB und der VNB DB (PIN Sperrbereitstellung)
6. Schnittstelle zwischen der VNB DB und der RSP DB (PIN Sperrinformation)

Die Schnittstellen werden im folgenden detailliert beschrieben, für die VNB-Routingschnittstellen werden weitere vorzugsweise Ausführungsformen aufgezeigt, die auch noch zu einem späteren Zeitpunkt implementierbar, d.h. nachrüstbar, sind.

### 1. Schnittstelle 16 zwischen TNB 10 / RegTP und DZP 9 zur Anlieferung von Portierungsdaten (DZP-Eingangsschnittstelle)

Die hier verwendete Schnittstelle wird als Eingangsschnittstelle zur Datenanlieferung (insbesondere: Datenabholung der NEXNET) betrachtet. Die Eingangsschnittstelle ist vorzugsweise über eine Euro-ISDN Wählverbindung realisiert und folgt damit den Regeln des UAK TNB/VNB-Wechsel des AKNN.

Die Einwahl ist ferner vorzugsweise über eine FTP-Verbindung realisiert. Vorzugsweise kommt als Komprimierverfahren auf der Eingangsseite GZIP für den geographischen Portierungsdatenaustausch zur Anwendung.

Im Falle einer Abholung von Rufnummernblockzuordnungsdaten und Deltafiles bei der RegTP erfolgt der Transfer vorzugsweise über das IP-Protokoll (TCP/IP) aus dem öffentlichen Teil der RegTP Seite über das Internet.

Bei der Abholung von TNB-Daten ist NEXNET vorzugsweise stets der aktive Part. Im Rahmen des Requestverfahrens haben die TNB aber auch die Möglichkeit über die hier genannte Schnittstelle ihren Request an NEXNET abzusetzen (NEXNET ist dann passiv).

Zusammengefasst können die geographischen Portierungsdaten der TNB werden von der NEXNET entweder abgeholt (Requestverfahren) oder an die NEXNET übermittelt (Erweiterung des Standardverfahrens der NEXNET) werden. Der Transfer erfolgt dabei vorzugsweise mit FTP via einer Euro-ISDN-Wählverbindung. Dabei handelt es sich zum einen um das Standardverfahren und auch um eine Erweiterung des Standardverfahrens durch die NEXNET.

### 2. Schnittstelle zwischen DZP 9 und der VNB Routing DB 17

Die Schnittstelle zwischen DZP 9 und der VNB Routing DB 17 ist die Ausgangsschnittstelle der DZP 9, die neben den VNB Routinganforderungen natürlich auch die TNB Portierungsdaten bereitstellt.

Die Bereitstellung erfolgt vorzugsweise immer als Datentouple: A-Rufnummer, Portierungskennung (ggf. später mit Resellerkennung), wie beim UAK TNB/VNB-Wechsel beschrieben.

Für die TNB gilt, dass auf der Ausgangsseite vorzugsweise PGP und auch weiterhin GZIP oder ein anderes Verschlüsselungsverfahren angeboten wird. Weiterhin wird auf der Ausgangsseite vorzugsweise FTP zusätzlich über das Internet und auch über die Euro-ISDN-Wählverbindung für geographische Portierungen (und Diensterufnummernportierungen) angeboten. Verschlüsselt wird in beiden Fällen vorzugsweise mit PGP (z.B. Version 2.63i). NEXNET kann angepollt werden (NEXNET bleibt passiv) oder liefert aktiv die Daten an VNB bzw. TNB aus.

Eine Sicherung erfolgt vorzugsweise durch den Eintrag der ISDN Rufnummern in eine CUG, bei den IP-Adressen der Einsatz eines Nummernkreises nach RFC 1918 Absatz 3 (private address space). Gesichert werden die Response Files mit Prüfsummen.

Auf der Ausgangsseite werden vorzugsweise auch Daten bereitgestellt, die über ein Webportal gefiltert werden.

Für die permanente Bereitstellung von Daten neben dem Requestverfahren werden vorzugsweise Verzeichnisstrukturen bereitgestellt.

Für die VNB, VNB/SP gilt, dass alle VNB gemäß den Vorgaben für die TNB auf die Portierungsdaten zugreifen können. Zukünftig können den VNB Daten für die Abrechnung historisiert bereitgestellt werden, und die Daten können so aufbereitet werden, dass sie von den VNB auch direkt für Routingzwecke eingesetzt werden können.

Für den Fall des Einsatzes für Routingzwecke ist es vorzuziehen, die DZP für einen Online-Zugriff bereitzustellen und vorzugsweise im Rahmen eines IN-Einsatzes über eine TC-Schnittstelle (Transaction Capabilities) mit einer TCAP (Transaction Capabilities Application Part) Architektur auszustatten. Damit kann direkt über das Zeichengabenetz Nr. 7 (CCS7) auf die Datenbank zugegriffen werden, ohne einen Nutzkanal zur DZP aufzubauen und die DZP kann somit direkt an die IN-Systeme der einzelnen Netzbetreiber gekoppelt werden. Dadurch werden über die X.200-Empfehlungen der ITU verbindungsorientierte Netzdienste über den INAP möglich.

Im Regelfall gewinnt der VNB wie auch der TNB aus der DZP nur die beiden Informationen Rufnummer und Portierung (insofern keine historisierte Abfrage erfolgte), bei der IN-Abfrage lässt sich aber die Information direkt online gewinnen und bei einem fehlerbehafteten Callaufbau ggf. das Query-On-Release-Verfahren anwenden. Die neue TNB-Zuordnung wäre dann aus der DZP zu gewinnen.

Ein Callaufbau eines VNB läst sich als mögliches Szenario beschreiben:
1. TNB(1) routet zu ausgewähltem VNB
2. VNB routet zu vermutetem TNB(2) nach Angaben seiner lokalen Portierungs-DB oder Routing-DB
3. Für einen Zeitraum nach RUZ leitet der TNB(2) nicht mehr zu einem TNB(3) weiter, zu dem er seinen Teilnehmer portiert hat. TNB(2) löst aus (sendet Release Cause).
4. Der VNB stellt eine Anfrage an die Online-DZP zum Verbleib der A-Rufnummer über den INAP
5. Die DZP beantwortet die Anfrage mit einer neuen TNB(3)-Information
6. Der VNB stellt dann die Verbindung an den TNB(3) zu
7.Der VNB korrigiert seine lokale Portierungs/ Routing-DB entsprechend.

Das Verfahren wird in der Zeichengabe auch als Query-On-Release bezeichnet. Die DZP hat somit zusätzlich die Möglichkeit bei der Korrektur von Portierungsdaten, während des Verbindungsaufbaus, mitzuwirken.

Eine Online-Schnittstelle bedeutet deshalb eine extrem hohe Systemlast für die DZP, weshalb auch ein Query-All-The-Time-Verfahren abzulehnen ist.

### 3. Schnittstelle zwischen DZP-WL 1 und der VNB Routing DB 17

Da die DZP-WL 1 eine logische UND-Verknüpfung zwischen der DZP 9 und der NEXNET Vertrags-DB 12 darstellt, sind die in der DZP-WL 1 abgelegten Informationen vorzugsweise vom Format her identisch mit der DZP 9. Die DZP-WL 1 stellt in diesem Fall somit eine direkte Untermenge der DZP 9 dar. Für die Formate gilt deshalb dieselbe Aussage:
Die Bereitstellung erfolgt immer als Datentouple: A-Rufnummer, Portierungskennung (ggf. später mit Resellerkennung) wie beim UAK TNB/VNB-Wechsel beschrieben.
Da die DZP-WL 1 keine über die DZP hinausgehende Informationen enthält, ist sie routingtechnisch nicht direkt zu gebrauchen. Allerdings stellt sie, wie auch schon in der Figur 1 dargestellt, eine abrechnungstechnische Liste dar.

Deshalb sollte der VNB anhand der DZP-WL 1 entscheiden, ob er eine Verbindung zu einem Dienst herstellt oder nicht. Das kann zum einen durch einen normalen DB-Abzug erfolgen oder auch durch einen Online-Zugriff.

Geographische Rufnummern als Routingziel lassen sich direkt mit der DZP-Information verarbeiten, Diensteziele im Offline-Billing (0900) sollten über die DZP-WL 1 auf Abrechenbarkeit des Ursprungs geprüft werden. Bei Diensterufnummernverbindungen kann deshalb der folgende Zugriff beschrieben werden:
1. Der TNB stellt eine Verbindung zu einem Ziel VNB (VNB/SP) her
2.Der VNB prüft in der DZP-WL (ggf. Online), ob der Ursprung abrechenbar ist.
3.Der VNB stellt die Verbindung dann zu oder löst eine Reaktion aus, die in [2] bereits ausführlich beschrieben ist.

### 4. Schnittstelle zwischen ZAST900 WL 3 und der VNB DB 18

Die ZAST900 3 ist anders strukturiert als die DZP 9 und enthält keine Informationen über den physikalischen Ursprung der Verbindung. Die bereitgestellte Information beinhaltet vorzugsweise nur die A-Rufnummer, die PIN und ggf. einen Scoringwert des Kunden.

Eine Onlineverbindung, auch später als TCAP-Dienst über den INAP, ist vorzuziehen, obwohl der VNB mit einem einfachen DB-Abzug über die bereits oben erwähnten Verfahren FTP über IP und FTP über Wählverbindung auskommen kann.

### 5. Schnittstelle zwischen RSP DB und der VNB DB (PIN Sperrbereitstellung)

Die hier vorzugsweise in der ZAST900 BL 8 (oder auch RSP DB 8) verfügbaren Informationen beinhalten Sperrinformationen zu Rufnummern, die zwar für höherpreisige Mehrwertdienste angemeldet sind, aber entweder durch eine mehrfache falsche PIN-Angabe auffällig geworden sind oder die aufgrund einer schlechten Zahlungsmoral oder Bonitätsüberprüfung nicht für die Mehrwertdienstezulassung zu empfehlen sind. Bereitgestellt werden hier vorzugsweise nur A-Rufnummern und ggf. ein Scoringwert, damit ein VNB/SP immer noch entscheiden kann, ob er einen Kunden für einen Dienst zulassen will oder nicht. Da allerdings auch der Anschlussmissbrauch durch falsche PIN-Angaben mitabgedeckt wird, ist dem VNB/SP dringend davon abzuraten einen solchen Teilnehmer zuzulassen.

Die Bereitstellung erfolgt ebenfalls vorzugsweise zunächst nur über den FTP-Transfer via IP und/oder Wählverbindung. Allerdings ist aufgrund der für den VNB wichtigen Information, einen Teilnehmer von seinen Dienstezugängen auszuschließen oder nicht, die Bedeutung einer Informationsintegration in den Call-Aufbauprozeß von essentieller Wichtigkeit. Der Dienst sollte deshalb vorzugsweise später als TCAP Dienst über einen INAP Zugang erfolgen. Im Rahmen der Bewertung des Teilnehmers und dem Wert des Dienstes kann der VNB, insofern die A-Rufnummer in der RSP-DB 8 auftaucht, den Teilnehmer dringend von seinen Dienstleistungen ausschließen. Mögliche Szenarien für einen solchen Fall sind oben ausführlich beschrieben.

### 6. Schnittstelle zwischen der VNB DB 18 und der RSP DB 8 (PIN Sperrinformation)

Die hier beschriebene Schnittstelle stellt eine Rückschnittstelle des VNB/SP dar. Bei der Rückschnittstelle hat der VNB/SP (oder der VNB) die Möglichkeit eine Rufnummer zurück zu signalisieren, bei der eine PIN mehrfach falsch eingegeben wurde. Die ZAST900 BL 8 kann somit alle anderen VNB/SP darüber informieren, dass ggf. bei einer A-Rufnummer ein Missbrauchsversuch stattfindet oder stattfand und andere, oben beschriebene, Schritte einleiten.

Der Empfang der Information erfolgt ebenfalls vorzugsweise zunächst nur über den FTP-Transfer via IP und/oder Wählverbindung. Allerdings ist aufgrund der für die ZAST900 und andere VNB wichtigen Information, einen Teilnehmer von seinen Dienstezugängen auszuschließen oder nicht, die Bedeutung einer Informationsintegration in den Call-Aufbauprozeß und der Bereitstellung von Missbrauchsinformation von essentieller Wichtigkeit. Der Dienst sollte deshalb vorzugsweise später als TCAP Dienst realisiert werden und über das INAP Protokoll erfolgen.

### Glossar

- AKNN: Arbeitskreis für technische und betriebliche Fragen der Nummerierung und Netzzusammenschaltung
Von den VNB, TNB, Systemlieferanten und der RegTP genutztes Forum zur Lösung von Nummerierungs- und Zusammenschaltungsproblemen
- BL: Blacklist
Liste, die Teilnehmern den Zugang zu Diensten untersagt
- CH: Clearing House Einrichtung zur technischen und/oder finanziellen Abrechnung zwischen Netzbetreibern und Endkunden im TK-Markt
- LD: Leistungsdaten
Bepreiste Datensätze die alle für die Abrechnung relevanten Informationen beinhalten
- DZP: Deutschlandweite Zentrale Portierungsdatenbank Produkt der NEXNET zur Erkennung des Ursprungsnetzbetreibers: TNB und eines TNB-Resellers
- DZP-WL: DZP-Whitelist
Liste die Teilnehmern den Zugang zu Diensten erlaubt und über die DZP realisiert ist.
- IN: Intelligent Network Die Intelligente Netzwerkfunktion erweitert einfache Vermittlungsnetze um höherwertige Netz- und Diensteeigenschaften.
Das ZGS7 arbeitet nicht mehr nur mit dem ISUP Protokoll sondern wird um den INAP ergänzt. Damit sind höherwertige Dienste und Netzleistungen für den
Betreiber möglich.
- INAP: IN-Applikationpart
Nutzer des ZGS7 für die Realisierung höherwertige Netzdienste (Protokoll)

- ISUP: ISDN User Part Nutzer des ZGS7 für die Realisierung der ISDN-Dienste (Protokoll)
- RegTP: Regulierungsbehörde für Telekommunikation und Post u. a. staatliches Kontrollorgan des BMWA zur Prüfung der gesetzlichen Regeln zur Schaffung eines offenen und fairen Wettbewerbs im Telekommikationssektor und bei der Post.
- RSP-DB: Rufnummernsperr-DB (auch ZAST900 BL) Datenbank die auffällig gewordene Teilnehmer und Teilnehmer die ihre PIN mehrfach falsch eingegeben haben von der weiteren Teilnahme an hochpreisigen Mehrwertdiensten ausschließt.
- RUZ: Rufumleitungszeit (2 Monate)
Zeit in der ein TNB verpflichtet ist das Routing für einen Call weiterzuleiten.
- TC: Transaction Capabilities
Funktionen und Prozeduren um nicht nutzkanalbezogene Informationen über Zeichengabenetze zwischen verschiedenen Arten von Einrichtungen zu transferieren. TC sind grundlegende, aber von Anwendungen unabhängige Dienste
- TCAP: Transaction Capabilities Application Part
Funktion des Informationstransfers zwischen zwei Netzknoten, der auf den TC beruht
- TNB: Teilnehmernetzbetreiber
Netzbetreiber der Teilnehmeranschlüsse von Endkunden physikalisch anschaltet
- UAK TNB/VNB-Wechsel: Unterarbeitskreis Teilnehmernetzbetreiber / Verbindungsnetzbetreiberwechsel des AKNN (Arbeitskreis für technische und betriebliche Fragen der Nummerierung und Netzzusammenschaltung). Der o.a. UAK hat u.a. die Regeln für die Portierung in Deutschland festgelegt. Das Regelwerk des UAK wurde von der RegTP anschließend verfügt.
- VNB: Verbindungsnetzbetreiber
Netzbetreiber der Verbindungen von Telefongesprächen vermittelt, die zu geografischen Zielen gehen.
- VNB/SP: Verbindungsnetzbetreiber mit Serviceplattform
Netzbetreiber der Verbindungen von Telefongesprächen vermittelt, die zu geografischen und Dienstezielen (0900, 118xy, 012, ....) gehen.
- WL: Whitelist
Liste die Teilnehmern den Zugang zu Diensten erlaubt
- ZAST900: Zentrale Anmeldestelle für Mehrwertdienste in der Gasse 0900:
Produkt und Verfahren der NEXNET zur Anmeldung von Endteilnehmern für höher- und hochpreisige Mehrwertdienste für die Rufnummerngasse 0900
- ZGS7: Zeichen gabe system Nr.7 Digitales Zeichengabesystem zur Realisierung des ISDN und der digitalen Vermittlungsdienste

## Patentansprüche

1. Verfahren zur automatischen Freigabe eines Aufbaus einer Mehrwertverbindung, die im offline-billing Verfahren abgerechnet wird, **gekennzeichnet durch** die Schritte:
- Aufbau oder Annahme einer Verbindung mit wenigstens einem Teilnehmernetzbetreiber,
- Empfangen von Teilnehmernummern des wenigstens einen Teilnehmernetzbetreibers,
- Überprüfen, ob die empfangenen Teilnehmernummern jeweils zum offline-billing zugelassen sind,
- Füllen einer Zulassungsdatenbank (1) mit denjenigen Teilnehmernummern, die zum offline-billing zugelassen sind, damit ein Verbindungsnetzbetreiber (2) **durch** eine Datenverbindung mit der Zulassungsdatenbank (1) überprüfen kann, ob ein Teilnehmer mit einer bestimmten Teilnehmernummer zugelassen ist, die Mehrwertverbindung aufzubauen, und
- Bereitstellen der Zulassungsdatenbank (1) für wenigstens einen Verbindungsnetzbetreiber.

2. Verfahren zur automatischen Freigabe eines Aufbaus einer Mehrwertverbindung, die im offline-billing Verfahren abgerechnet wird, **gekennzeichnet durch** die Schritte:
- Aufbau oder Annahme einer Verbindung mit wenigstens einem Teilnehmernetzbetreiber,
- Empfangen von Teilnehmernummern und zugeordneten PIN-Nummern des wenigstens einen Teilnehmernetzbetreibers,
- Füllen einer PIN-Datenbank (3) mit Teilnehmernummern und zugeordneten PIN-Nummern, damit ein Verbindungsnetzbetreiber (2) **durch** eine Datenverbindung mit der PIN-Datenbank (3) überprüfen kann, ob sich ein Teilnehmer mit einer bestimmten Teilnehmernummer mit einer bestimmten PIN-Nummer verifizieren kann, um die Mehrwertverbindung aufzubauen, und
- Bereitstellen der PIN-Datenbank (3) für wenigstens einen Verbindungsnetzbetreiber.

3. Verfahren nach Anspruch 1, **gekennzeichnet durch** die Schritte:
- Aufbau oder Annahme einer Verbindung mit wenigstens einem Teilnehmernetzbetreiber,
- Empfangen von Teilnehmernummern und zugeordneten PIN-Nummern des wenigstens einen Teilnehmernetzbetreibers,
- Füllen einer PIN-Datenbank (3) mit Teilnehmernummern und zugeordneten PIN-Nummern, damit ein Verbindungsnetzbetreiber (2) **durch** eine Datenverbindung mit der PIN-Datenbank (3) überprüfen kann, ob sich ein Teilnehmer mit einer bestimmten Teilnehmernummer mit einer bestimmten PIN-Nummer verifizieren kann, um die Mehrwertverbindung aufzubauen, und
- Bereitstellen der PIN-Datenbank (3) für wenigstens einen Verbindungsnetzbetreiber.

4. Verfahren nach Anspruch 2 oder 3, **dadurch gekennzeichnet, dass** die Mehrwertverbindung eine höherwertige Mehrwertverbindung ist.

5. Verfahren nach einem der Ansprüche 2 bis 4, **gekennzeichnet durch** die folgenden Schritte zur Erstellung der PIN-Datenbank:
- automatisches abfragen von Vertragsinformation von Teilnehmernetzbetreibern (4) mit Faktura wenigstens eines Clearinghauses, die Anzeigen, ob eine Teilnehmernummer für höherwertige Mehrwertdienstleistungen zugelassen ist, und sammeln zugelassener Teilnehmernummern in einer Freigabedatenbank (5), und/oder manuelle Aufnahme einer Teilnehmernummer (6) eines Teilnehmers nach einem positiv abgeschlossen Überprüfungsverfahren des Teilnehmers in die Freigabedatenbank (5), und
- automatisches erstellen einer Liste von allen Teilnehmernummern der Freigabedatenbank, die ein positives Bonitäts- und/oder Adressprüfungsverfahren (7) durchlaufen haben, als die PIN-Datenbank (3).

6. Verfahren nach einem der vorstehenden Ansprüche 1 und 3 bis 5, **gekennzeichnet durch** die folgenden Schritte zur Erstellung der Zulassungsdatenbank:
- automatisches abfragen und sammeln aller Teilnehmernummern aller Teilnehmernetzbetreiber (10), um eine Basisdatenbank (9) mit allen vergebenen Teilnehmernummern zu erstellen,
- automatisches validieren aller Teilnehmernummern, um die Eindeutigkeit jeder Teilnehmernummer zu gewährleisten,
- automatisches abfragen von Vertragsinformation von Teilnehmernetzbetreibern (11, 4) mit einer Schnittstelle für fremdbepreiste Mehrwertdienstleistungen und/oder Faktura wenigstens eines Clearinghauses, die Anzeigen, ob eine Teilnehmernummer für normalwertige Mehrwertdienstleistungen zugelassen ist, und sammeln der zugelassenen Teilnehmernummern in einer Vertragsdatenbank (12), und
- automatisches erstellen einer Liste von allen eindeutigen Teilnehmernummern, die für normalwertige Mehrwertdienstleistungen zugelassen sind, als die Zulassungsdatenbank (1).

7. Verfahren nach Anspruch 6, **dadurch gekennzeichnet, dass** eine Teilnehmernummer eines Teilnehmers nach einem positiv abgeschlossen Überprüfungsverfahren des Teilnehmers manuell in die Zulassungsdatenbank (1) aufgenommen wird.

8. Verfahren nach einem der vorstehenden Ansprüche, **gekennzeichnet durch** den folgenden Schritt:
- Bereitstellen einer Sperrdatenbank (8) mit Teilnehmernummern, damit ein Verbindungsnetzbetreiber (2) **durch** eine Datenverbindung mit der Sperrdatenbank (8) überprüfen kann, ob ein Teilnehmer mit einer bestimmten Teilnehmernummer gesperrt ist, die Mehrwertverbindung aufzubauen.

9. Verfahren nach einem der vorstehenden Ansprüche, **dadurch gekennzeichnet, dass** die Datenverbindung eine Übertragung einer jeweiligen vollständigen Datenbank an einen Verbindungsnetzbetreiber (2) vorsieht, damit dieser eine offline-Überprüfung einer Teilnehmernummer durchführen kann, und/oder dass über die Datenverbindung eine online-Überprüfung einer Teilnehmernummer durch einen Verbindungsnetzbetreiber (2) erfolgen kann.

10. Verfahren nach einem der vorstehenden Ansprüche, **dadurch gekennzeichnet, dass** eine Überprüfung eines Verbindungsnetzbetreibers (2), ob ein Teilnehmer mit einer bestimmten Teilnehmernummer zugelassen ist, die Mehrwertverbindung aufzubauen, in einem Zeitabschnitt unterhalb einer Minute durchführbar ist.

11. System zur automatischen Freigabe eines Aufbaus einer Mehrwertverbindung, die im offline-billing Verfahren abgerechnet wird, **gekennzeichnet durch**
- eine erste Schnittstelle zum Aufbau oder zur Annahme einer Verbindung mit wenigstens einem Teilnehmernetzbetreiber und zum Empfangen von Teilnehmernummern des wenigstens einen Teilnehmernetzbetreibers,
- eine Überprüfungseinheit zum Überprüfen, ob die empfangenen Teilnehmernummern jeweils zum offline-billing zugelassen sind,
- eine erste Fülleinheit zum Füllen einer Zulassungsdatenbank (1) mit denjenigen Teilnehmernummern, die zum offline-billing zugelassen sind, damit ein Verbindungsnetzbetreiber (2) **durch** eine Datenverbindung mit der Zulassungsdatenbank (1) überprüfen kann, ob ein Teilnehmer mit einer bestimmten Teilnehmernummer zugelassen ist, die Mehrwertverbindung aufzubauen, und
- eine zweite Schnittstelle zum Bereitstellen der Zulassungsdatenbank für wenigstens einen Verbindungsnetzbetreiber.

12. System zur automatischen Freigabe eines Aufbaus einer Mehrwertverbindung, die im offline-billing Verfahren abgerechnet wird, **gekennzeichnet durch**
- eine dritte Schnittstelle zum Aufbau oder zur Annahme einer Verbindung mit wenigstens einem Teilnehmernetzbetreiber und zum Empfangen von Teilnehmernummern und zugeordneten PIN-Nummern des wenigstens einen Teilnehmernetzbetreibers,
- eine zweite Fülleinheit zum Füllen einer PIN-Datenbank (3) mit Teilnehmernummern und zugeordneten PIN-Nummern, damit ein Verbindungsnetzbetreiber (2) **durch** eine Datenverbindung mit der PIN-Datenbank (3) überprüfen kann, ob sich ein Teilnehmer mit einer bestimmten Teilnehmernummer mit einer bestimmten PIN-Nummer verifizieren kann, um die Mehrwertverbindung aufzubauen, und
- eine vierte Schnittstelle zum Bereitstellen der PIN-Datenbank für wenigstens einen Verbindungsnetzbetreiber.

13. System nach Anspruch 11, **gekennzeichnet durch**
- eine dritte Schnittstelle zum Aufbau oder zur Annahme einer Verbindung mit wenigstens einem Teilnehmernetzbetreiber und zum Empfangen von Teilnehmernummern und zugeordneten PIN-Nummern des wenigstens einen Teilnehmernetzbetreibers,
- eine zweite Fülleinheit zum Füllen einer PIN-Datenbank (3) mit Teilnehmernummern und zugeordneten PIN-Nummern, damit ein Verbindungsnetzbetreiber (2) **durch** eine Datenverbindung mit der PIN-Datenbank (3) überprüfen kann, ob sich ein Teilnehmer mit einer bestimmten Teilnehmernummer mit einer bestimmten PIN-Nummer verifizieren kann, um die Mehrwertverbindung aufzubauen, und
- eine vierte Schnittstelle zum Bereitstellen der PIN-Datenbank für wenigstens einen Verbindungsnetzbetreiber.

14. System nach Anspruch 12 oder 13, **dadurch gekennzeichnet, dass** die Mehrwertverbindung eine höherwertige Mehrwertverbindung ist.

15. System nach einem der Ansprüche 12 bis 14, **dadurch gekennzeichnet, dass** die zweite Fülleinheit umfasst:
- eine erste Abfrageeinheit zum automatischen abfragen von Vertragsinformation von Teilnehmernetzbetreibern (4) mit Faktura wenigstens eines Clearinghauses, die Anzeigen, ob eine Teilnehmernummer für höherwertige Mehrwertdienstleistungen zugelassen ist, und sammeln zugelassener Teilnehmernummern in einer Freigabedatenbank (5), und/oder
- eine erste Aufnahmeeinheit zur manuellen Aufnahme einer Teilnehmernummer (6) eines Teilnehmers nach einem positiv abgeschlossen Überprüfungsverfahren des Teilnehmers in die Freigabedatenbank (5), und
- eine erste Prüfeinheit (7) zum automatischen übertragen aller Teilnehmernummern der Freigabedatenbank (5), die ein positives Bonitäts- und/oder Adressprüfungsverfahren durchlaufen haben, in die PIN-Datenbank (3).

16. System nach einem der vorstehenden Ansprüche 11 und 13 bis 15, **gekennzeichnet durch**
- eine zweite Abfrageeinheit zum automatischen abfragen und sammeln aller Teilnehmernummern aller Teilnehmernetzbetreiber (10), um eine Basisdatenbank (9) mit allen vergebenen Teilnehmernummern zu erstellen,
- eine Validierungseinheit zum automatischen validieren aller Teilnehmernummern, um die Eindeutigkeit jeder Teilnehmernummer zu gewährleisten, innerhalb der Überprüfungseinheit,
- eine dritte Abfrageeinheit zum automatisches abfragen von Vertragsinformation von Teilnehmernetzbetreibern (11, 4) mit einer Schnittstelle für fremdbepreiste Mehrwertdienstleistungen und/oder Faktura wenigstens eines Clearinghauses, die Anzeigen, ob eine Teilnehmernummer für normalwertige Mehrwertdienstleistungen zugelassen ist, und sammeln der zugelassenen Teilnehmernummern in einer Vertragsdatenbank (12), innerhalb der Überprüfungseinheit, und
- eine zweite Prüfeinheit zum automatischen übertragen von allen eindeutigen Teilnehmernummern, die für normalwertige Mehrwertdienstleistungen zugelassen sind, in die Zulassungsdatenbank (1), innerhalb der ersten Fülleinheit.

17. System nach Anspruch 16, **dadurch gekennzeichnet, dass**
- die erste Fülleinheit eine zweite Aufnahmeeinheit zur manuellen Aufnahme einer Teilnehmernummer eines Teilnehmers nach einem positiv abgeschlossen Überprüfungsverfahren des Teilnehmers in die Zulassungsdatenbank (1) umfasst.

18. System nach einem der vorstehenden Ansprüche 11 bis 17, **gekennzeichnet durch**
- eine Sperrdatenbank (8) mit Teilnehmernummern, damit ein Verbindungsnetzbetreiber (2) **durch** eine Datenverbindung mit der Sperrdatenbank (8) überprüfen kann, ob ein Teilnehmer mit einer bestimmten Teilnehmernummer gesperrt ist, die Mehrwertverbindung aufzubauen.

19. System nach einem der vorstehenden Ansprüche 11 bis 18, **dadurch gekennzeichnet, dass**
- die zweite und/oder vierte Schnittstelle eine Datenverbindungsschnittstelle umfasst, mit der eine Übertragung einer jeweiligen vollständigen Datenbank an einen Verbindungsnetzbetreiber (2) durchgeführt werden kann, damit dieser eine offline-Überprüfung einer Teilnehmernummer durchführen kann, und/oder mit der eine online-Überprüfung einer Teilnehmernummer durch einen Verbindungsnetzbetreiber (2) durchgeführt werden kann.

20. System nach einem der vorstehenden Ansprüche 11 bis 19, **dadurch gekennzeichnet, dass** eine Überprüfung eines Verbindungsnetzbetreibers (2), ob ein Teilnehmer mit einer bestimmten Teilnehmernummer zugelassen ist, die Mehrwertverbindung aufzubauen, in einem Zeitabschnitt unterhalb einer Minute durchführbar ist.
